# FASCICULE DE BREVET EUROPEEN

(11) **EP 3 799 004 B1**
(45) Date de publication et mention de la délivrance du brevet: **16.04.2025**
(21) Numéro de dépôt: 20197971.3
(22) Date de dépôt: 24.09.2020
(51) Int. Cl.: G08B 17/107, G08B 17/113, G08B 29/18, B08B 1/34

(54) **DÉTECTEUR DE FUMÉES**
RAUCHMELDER
SMOKE DETECTOR

(30) Priorité: 30.09.2019 FR 1910818
(43) Date de publication de la demande: 31.03.2021
(73) Titulaire: Commissariat à l'Energie Atomique et aux Energies Alternatives, 75015 Paris (FR)
(72) Inventeur: PELISSON, Roland, 38054 Grenoble Cedex 9 (FR)
(74) Mandataire: Cabinet Beaumont

(56) Documents cités:
- CN-A- 105 448 028
- DE-A1- 102016 121 369
- DE-B4- 102016 121 369
- JP-A- 2008 077 473
- US-A- 3 460 124

## Description

### Domaine technique

La présente description concerne de façon générale les dispositifs de détection de fumées.

### Technique antérieure

On connaît de nombreux détecteurs de fumées pour prévenir les incendies domestiques, en entreprise ou dans l'industrie.

Le document JP 2008 077473 décrit un détecteur de fumées selon le préambule de la revendication 1.

Le document US 3 460 124 décrit un détecteur de fumées.

Le document CN 105 448 028 décrit un détecteur de fumée de type détection de lumière basé sur une transmission par fibre optique en plastique.

Le document DE 10 2016 121369 décrit une cellule de mesure de fumée destinée à être utilisée dans un détecteur de fumée photoélectrique.

### Résumé de l'invention

Il existe un besoin d'améliorer les détecteurs de fumées actuels, notamment afin d'en fiabiliser le fonctionnement et d'allonger leur durée de vie.

L'invention est telle que définie dans les revendications 1 à 16.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation en perspective, partielle et schématique, d'un mode de réalisation d'un détecteur de fumées ;
la figure 2 est une représentation en perspective d'un mode de réalisation d'un élément du détecteur de la figure 1 ;
la figure 3 est une représentation par des vues (A), (B) et (C) partielles et schématiques, respectivement latérale, de dessus et en perspective, d'un mode de réalisation d'un ensemble mobile du détecteur de la figure 1 ;
la figure 4 est une représentation en perspective et par des vues (A), (B) et (C), partielles et schématiques, d'un mode de réalisation de parties du détecteur de la figure 1 ;
la figure 5 est une représentation latérale, partielle et schématique, d'un mode de réalisation du détecteur de fumées de la figure 1 ; et
la figure 6 est une représentation, par des vues (A) et (B), partielles et schématiques, respectivement en perspective et en coupe d'un autre mode de réalisation d'un détecteur de fumées ;
la figure 7 est une représentation, par des vues (A) et (B) en perspective, partielles et schématiques, d'un autre mode de réalisation d'un détecteur de fumées, non couvert par l'invention.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier les circuits électroniques de commande et de mesure ainsi que les diodes électroluminescentes et détecteurs optiques n'ont pas été détaillés, les modes de réalisation décrits étant compatibles avec les structures et le fonctionnement des circuits électroniques, diodes et détecteurs usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Divers exemples de mise en œuvre et de réalisation sont exposés par la suite. Indépendamment de la dénomination donnée à ces exemples (modes de réalisation, exemples, variantes, etc.) et des qualificatifs employés (par exemple, de préférence, etc.), seules les parties de description incluses dans la portée des revendications font partie de la présente invention, les autres exemples n'étant exposés qu'à titre illustratif et n'étant utiles que pour mettre en évidence des aspects spécifiques à l'invention par rapport à ce qui n'en fait pas partie.

Les modes de réalisation décrits ci-après s'appliquent à la détection de fumées, notamment pour détecter les incendies. Certains détecteurs de fumées comportent également des fonctions de détection de chaleur ou de monoxyde de carbone.

L'installation de détecteurs de fumées devient de plus en plus souvent obligatoire. Leurs fonctionnements, caractéristiques et critères d'installation sont généralement régis par des normes.

L'installation et le fonctionnement des détecteurs sont, notamment dans les entreprises et les milieux industriels, vérifiés périodiquement. En particulier, la norme CE EN 14604 fixe des conditions de détection.

On connaît principalement deux catégories de détecteurs de fumées, les détecteurs ioniques et les détecteurs optiques.

Les modes de réalisation décrits, à titre d'exemple, concernent les détecteurs optiques. Ces modes de réalisation s'appliquent toutefois plus généralement à tout système d'auto nettoyage et de détection d'obstructions résiduelles dans un détecteur.

Un détecteur optique de fumées contient une chambre optique, une diode électroluminescente (LED) et un récepteur (cellule photo-électrique). La LED émet un signal lumineux qui, en temps normal (en l'absence de fumées), est absorbé par les parois de la chambre sans atteindre le détecteur. En présence de fumées, des particules en suspension dans la fumée réfléchissent la lumière. Le faisceau lumineux est ainsi dispersé dans la chambre et entre en contact avec le récepteur ou photodétecteur. Si le signal lumineux reçu par le récepteur est supérieur à un seuil fixé, une alarme se déclenche.

La chambre optique est généralement conçue pour :
être noire et opaque à la lumière extérieure ;
pouvoir être traversée par l'air ambiant et donc avoir des parois qui laissent passer l'air ; et
avoir des parois qui ne laissent pas passer les insectes ou la poussière.

Pour réunir l'ensemble de ces critères, certains détecteurs actuels comportent des parois définissant des passages indirects de l'extérieur à l'intérieur de la chambre. Ces parois sont positionnées en cercle. La LED et le photodétecteur sont placés dans la chambre.

Le dimensionnement des passages conditionne la fiabilité du détecteur et résulte d'un compromis entre le besoin d'isoler la chambre de l'extérieur et d'y laisser passer l'air.

Par ailleurs, des tests de fonctionnement périodiques sont généralement nécessaires.

Les modes de réalisation décrits tirent leur origine d'une nouvelle analyse du fonctionnement dans le temps d'un détecteur.

On pourrait penser, pour fiabiliser les détecteurs, augmenter la dimension des passages entre la chambre et l'extérieur. Cela favorisait le passage de l'air mais laisserait également passer certains insectes et la poussière. On pourrait à l'inverse penser diminuer la dimension des passages afin de limiter le passage de poussières extérieures qui déclenchent des alarmes intempestives. Toutefois cela favoriserait l'encrassage des passages et cela impliquerait alors soit un nettoyage manuel fréquent, soit engendrerait une absence de détection.

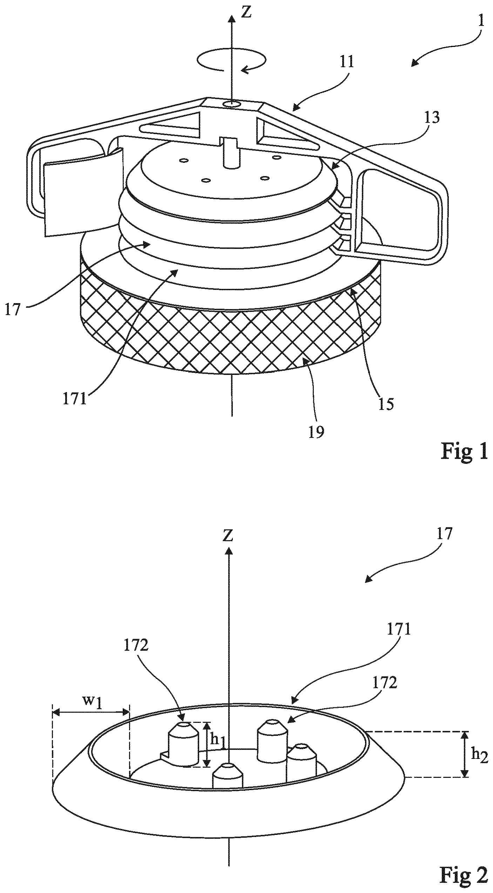

La figure 1 est une représentation en perspective, partielle et schématique, d'un mode de réalisation d'un détecteur 1 de fumées.

Le détecteur 1 illustré en figure 1 comprend plusieurs parties dont une chambre optique opaque à la lumière extérieure, délimitée en périphérie par un empilement d'éléments 17 comportant chacun un anneau 171.

Les anneaux 171 sont concentriques. Chaque anneau 171 a, en section transversale, une forme ouverte dans une direction axiale de l'empilement. Plus précisément, la section transversale des anneaux 171 peut avoir la forme générale d'un "V" ou d'un "U".

Les anneaux 171 sont empilés et emboités les uns dans les autres, de façon à délimiter des interstices ou espaces entre anneaux 171 où l'air peut circuler librement entre la chambre et l'extérieur. De par leur section, les anneaux 171 créent des chicanes de circulation d'air. L'ensemble des chicanes forme un système de chicanes.

A titre de variante de réalisation, les anneaux 171 peuvent être, au cours de leur fabrication, moulés en une seule fois pour former une seule pièce.

Dans le mode de réalisation de la figure 1, le détecteur 1 comporte un empilement vertical contenant trois éléments 17 donc trois anneaux 171. Le nombre d'éléments 17, donc d'anneaux 171, peut être compris entre 1 et 20, de préférence entre 1 et 6 et est préférentiellement égal à 3.

Dans le mode de réalisation tel que représenté en figure 1, le détecteur 1 comprend en outre :
un ensemble mobile 11 capable de tourner librement autour d'un axe Z, correspondant à l'axe de l'empilement des éléments 17 ;
un boitier 19 ayant une face supérieure 15 sur laquelle repose l'empilement d'éléments 17 ; et
un couvercle 13 qui ferme la chambre à l'opposé du boitier 19.

Le couvercle 13 et la face supérieure 15 du boitier 19 ferment la chambre à ses deux extrémités axiales. Des composants électroniques de la chambre optique, tels que par exemple une LED et un photodétecteur (non représentés sur la figure 1), sont fixés à la face 15 ou au couvercle 13.

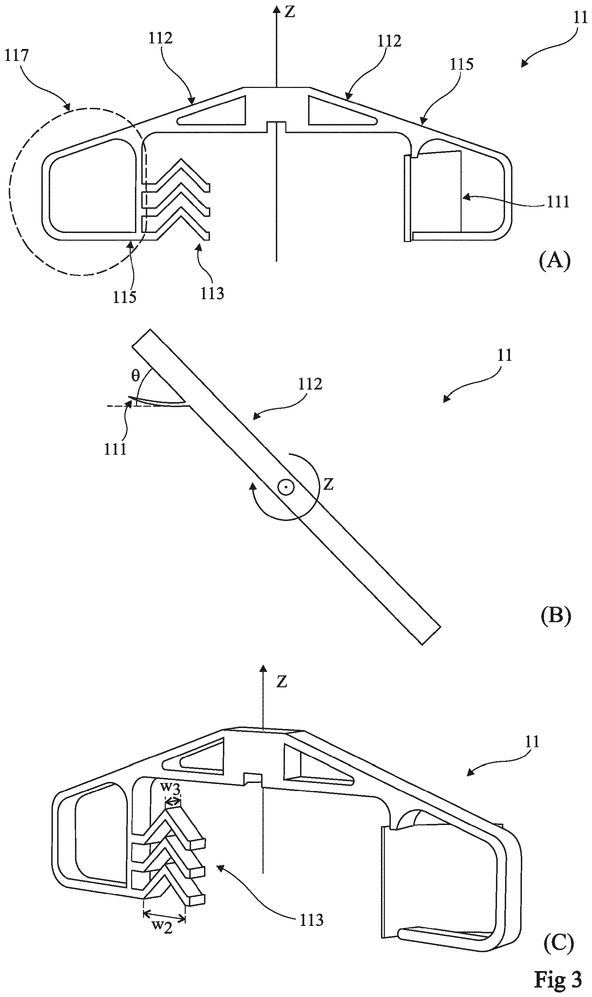

L'ensemble mobile 11 a plusieurs fonctions qui seront décrites ultérieurement plus en détail en relation avec la figure 3.

D'une part, il peut éliminer des obstacles (poussières, insectes, etc.) à la circulation d'air, ou détecter des obstructions qu'il ne peut nettoyer.

D'autre part, il peut ventiler l'intérieur de la chambre.

En outre, il peut détecter des obstacles dans l'environnement proche du détecteur 1.

Le boitier 19 contient en outre l'ensemble des circuits électroniques nécessaires au fonctionnement du détecteur 1. La LED et le photodétecteur sont notamment connectés à ces circuits.

La figure 2 est une représentation en perspective d'un mode de réalisation d'un élément 17 du détecteur 1 de la figure 1.

Chaque élément 17 est composé d'un anneau 171 et de plots d'assemblage 172. Les plots d'assemblage 172 sont solidaires de l'anneau 171. Dans l'exemple de la figure 2, les plots 172 sont à l'intérieur des anneaux 171.

Dans le mode de réalisation de la figure 2, l'élément 17 comporte quatre plots d'assemblage 172. En pratique et selon le mode de réalisation, le nombre de plots d'assemblage 172 par élément 17 peut être compris entre 1 et 10, de préférence entre 2 et 5 et est préférentiellement égal à 4.

Les plots d'assemblage 172 permettent d'assembler les éléments 17, le couvercle 13 et le boitier 19 entre eux. Les plots d'assemblage 172 consolident le détecteur 1 et imposent, par leur hauteur h₁, une distance entre les anneaux 171. Les plots 172 d'un élément 17 reposent sur les plots 172 de l'élément 17 situé juste en dessous ou, pour le premier anneau 171 de l'empilement, sur la face 15 du boitier 19. Les plots 172 du dernier élément 17 reçoivent le couvercle 13.

Plus les plots 172 sont grands (hauts), plus l'interstice entre les anneaux 171 dans l'empilement est important (large). A contrario, plus les plots 172 sont petits, plus l'interstice entre les anneaux 171 est faible (étroit).

Dans le mode de réalisation de la figure 2, les éléments 17 d'un empilement ont tous des plots d'assemblage 172 identiques. Ainsi, tous les anneaux 171 sont espacés les uns des autres par la même distance, et ce dans l'ensemble de l'empilement.

On peut envisager, dans un autre mode de réalisation non représenté, imposer des distances différentes entre les anneaux 171 de l'empilement. Ainsi, la taille des interstices entre les anneaux 171 pourrait varier avec la distance de l'anneau 171 par rapport au boitier 19.

Les anneaux 171 ne sont pas plats. Ainsi les deux branches (intérieure et extérieure) de l'anneau 171 forment un angle (non représenté sur la figure 2). On appelle α l'angle formé entre les deux branches de l'anneau 171. L'angle α correspond soit à l'angle du triangle pour un anneau 171 en "V" (branches rectilignes), soit à l'angle du triangle dans lequel s'inscrit un anneau 171 en "U" (branches arrondies).

L'angle α est généralement le même pour tous les anneaux 171 d'un même empilement. Toutefois il peut en variante être différent selon le mode de réalisation.

L'angle α est par exemple compris entre 10 et 170°, de préférence entre 45 et 120°, l'angle α étant préférentiellement égal à environ 90°, par exemple égal à 90°.

Chaque anneau 171 a une hauteur h₂. La hauteur h₂ correspond à la hauteur entre le point le plus bas de la section de l'anneau 171 et le point le plus haut (le sommet de la pointe ou de l'arrondi).

La hauteur h₂ d'un anneau 171 est par exemple comprise entre 0,1 et 3 cm, de préférence entre 0,5 et 1,5 cm, la hauteur h₂ étant préférentiellement égale à environ 0,7 cm, par exemple égale à 0,7 cm.

La hauteur h₁ d'un plot d'assemblage 172 est par exemple comprise entre 0,1 et 3 cm, de préférence entre 0,5 et 1,5 cm, la hauteur h₁ étant préférentiellement égale à environ 0,6 cm, par exemple égale à 0,6 cm.

La hauteur h₁ est, de préférence, inférieure à la hauteur h₂ afin que les chicanes fassent obstacle à la lumière directe extérieure.

Chaque anneau 171 a une largeur w₁ par exemple comprise entre 0,1 et 3 cm, de préférence entre 0,7 et 2 cm, la largeur w₁ étant préférentiellement égale à environ 1,5 cm, par exemple égale à 1,5 cm.

Le nombre d'éléments 17 et l'espacement des anneaux 171 sont déterminés en fonction de l'environnement dans lequel est situé le détecteur 1 (poussière, insectes, luminosité, etc.). Ces deux paramètres sont ajustés pour que l'air ambiant puisse ventiler suffisamment la chambre, que la lumière extérieure ne puisse pas rentrer dans la chambre et que les poussières et les insectes soient bloqués par les chicanes.

La figure 3 est une représentation par des vues (A), (B) et (C), partielles et schématiques, respectivement latérale, de dessus et en perspective, d'un mode de réalisation d'un ensemble mobile 11 du détecteur 1 de la figure 1.

L'ensemble mobile 11 est, dans le mode de réalisation de la figure 3, externe à l'empilement des éléments 17. Ainsi, l'ensemble mobile 11 tourne autour de l'empilement d'éléments 17 selon l'axe Z.

L'ensemble mobile 11 est, de préférence, entrainé par un moteur (placé dans le boitier 19), ce qui permet de générer sa rotation automatiquement. On peut en variante faire tourner l'ensemble mobile 11 manuellement.

Dans le mode de réalisation de la figure 3, l'ensemble mobile 11 comprend deux bras 112 alignés, de part et d'autre de l'axe de rotation. On appelle "bras" 112, une partie de l'ensemble mobile 11 qui est reliée à l'axe Z de rotation et qui s'étend dans une direction orthogonale à ce même axe Z.

Le nombre de bras 112 peut être compris entre 1 et 20, de préférence entre 1 et 6, le nombre de bras étant préférentiellement égal à 2.

De préférence, chaque bras 112 porte un module comprenant des pattes 113, ou une ailette 111. Ainsi, un détecteur 1 à plusieurs bras 112 peut recevoir un ou plusieurs modules de pattes 113 et/ou une ou plusieurs ailettes 111.

Dans le mode de réalisation de la figure 3, un premier bras 112 de l'ensemble mobile 11 reçoit un module de trois pattes 113. En pratique, le nombre de pattes 113 est généralement égal au nombre d'éléments 17 que comporte le détecteur 1.

Les pattes 113 sont, dans le détecteur 1, intercalées entre deux anneaux 171 successifs. Ainsi, les pattes 113 tournent dans les interstices entre les anneaux 171. En outre, une patte 113 tourne dans l'interstice créé entre l'anneau 171 le plus proche du couvercle 13 et ce dernier. De préférence, l'anneau 171 le plus proche de la face supérieure 15 du boitier 19 est porté par celle-ci.

Les pattes 113 ont de préférence, en section, une forme correspondant à la forme de la section des anneaux 171.

Les pattes 113 sont portées par un montant 115 du bras 112 concerné. La rotation de l'ensemble mobile 11 engendre la rotation des pattes 113 entre les anneaux 171 à la manière d'une fourchette ou d'un peigne dont les dents seraient insérées entre les anneaux 171 depuis l'extérieur.

En section, la longueur w₂ (vue (C)) d'une patte 113 dépend de la largeur w₁ des anneaux 171. Elle est généralement égale à la largeur w₁ des anneaux 171. La longueur w₂ est, par exemple, comprise entre 0,1 et 3 cm, de préférence entre 1 et 2,5 cm, la longueur w₂ étant préférentiellement égale à environ 1,5 cm, par exemple égale à 1,5 cm.

La largeur w₃ d'une patte 113 est de préférence constante. La largeur w₃ d'une patte 113 est choisie en fonction des dimensions des anneaux 171 et de l'épaisseur des interstices entre anneaux 171 afin de pouvoir tourner librement (avec jeu) entre deux anneaux 171.

La largeur w₃ est, par exemple, comprise entre 0,1 cm et 1,2 cm, de préférence entre 0,3 et 1 cm, la largeur w₃ étant préférentiellement environ égale à 0,8 cm, par exemple égale à 0,8 cm.

En variante, les pattes 113 ont des formes en arc de disque de même diamètre que les anneaux 171.

Le passage des pattes 113 dans les interstices des chicanes permet d'y éliminer des obstacles à la circulation d'air, par exemple, des poussières, des insectes, des toiles d'araignées, etc.

Pour certains obstacles, la force du moteur suffit à nettoyer les interstices.

Pour d'autres obstacles, la force du moteur n'est pas suffisante. Cependant, on peut détecter une résistance à la rotation et émettre une alarme informant d'un dysfonctionnement potentiel du détecteur 1 en raison d'obstruction(s). Un opérateur peut alors entrainer manuellement l'ensemble mobile 11, avec une force plus importante que celle du moteur, pour enlever, décoller ou décoincer la ou les obstructions.

A titre d'exemple particulier de mise en œuvre, le moteur est programmé pour faire tourner l'ensemble mobile 11 périodiquement, par exemple, dix secondes toutes les deux heures.

On peut en outre équiper les surfaces des pattes 113 de brosses afin de frotter, brosser la surface des anneaux 171. Cela permet en outre de compenser d'éventuelles tolérances de fabrication des anneaux 171 et de favoriser le nettoyage. L'orientation des brosses peut, en outre, permettre l'évacuation des poussières ou saletés vers l'extérieur des chicanes, à l'opposé de la chambre.

On peut en outre équiper l'extrémité des pattes 113 (à l'intérieur de la chambre) de brosses afin de frotter et nettoyer la surface de la LED et celle du photodétecteur. Cela permet, en outre, de favoriser le nettoyage et ainsi réduire les fausses détections.

Dans le mode de réalisation de la figure 3, un deuxième bras 112 de l'ensemble mobile 11 porte une ailette 111.

L'ailette 111 est portée par un montant 115 du bras 112. La rotation de l'ensemble mobile 11 engendre la rotation de l'ailette 111 autour des anneaux 171. L'ailette 111 a la forme d'un rectangle incurvé, ou d'une voile.

L'ailette 111 est fixée au montant 115 du bras 112 de l'ensemble mobile 11 avec un angle θ. L'angle θ, qui correspond à l'angle entre le bras 112 de l'ensemble mobile 11 sur lequel est fixée l'ailette 111 et la tangente à la base de l'ailette 111, est par exemple compris entre 1 et 170°, de préférence entre 10 et 90°, l'angle θ étant préférentiellement égal à environ 50°, par exemple égal à 50°.

La courbure de l'ailette 111, l'angle θ et le sens de rotation sont prévus pour engendrer une aspiration au niveau des chicanes. Ainsi, en tournant, l'ailette 111 chasse l'air qui se trouve devant elle. La dépression créée derrière l'ailette 111 provoque une aspiration de l'air situé à l'intérieur de la chambre. Cette aspiration permet de renouveler l'air de la chambre. L'air aspiré permet en outre d'entrainer, en passant, les poussières ou dépôts présents sur les anneaux 171, et ainsi de désobstruer les chicanes.

Le renouvellement de l'air de la chambre par les ailettes 111 a également pour avantage d'éviter de fausses détections. En effet, en cas de suspicion de fumées, le renouvellement de l'air dans la chambre permet de confirmer (ou valider) ou d'infirmer (ou invalider) la présence de fumées.

Par exemple, lorsque le photodétecteur détecte de la lumière diffusée, il peut déclencher une rotation de l'ensemble mobile 11. Le renouvellement de l'air de la chambre permet alors de lever le doute. Si le photodétecteur ne détecte plus de lumière diffusée, c'est qu'il s'agissait d'une fausse alerte. A contrario, si le photodétecteur reçoit toujours un faisceau de lumière diffusée, on est bien en présence de fumées dans l'environnement du détecteur 1.

Un avantage est que le nettoyage des chicanes, mais aussi le renouvellement de l'air dans la chambre, permet de fiabiliser le détecteur 1 en réduisant les fausses alertes.

Dans le mode de réalisation de la figure 3, les deux bras 112 portent à leurs extrémités libres des arceaux 117. Les arceaux 117 confèrent une rigidité à la structure sans l'alourdir de trop. Les arceaux 117 sont portés par les montants 115. Les arceaux 117 permettent de détecter des obstacles à proximité (quelques centimètres) du détecteur 1. La distance de détection dépend de la dimension des arceaux 117 et plus précisément de la longueur (orthogonale à l'axe Z) ajoutée au bras 112.

Une tige amovible et extensible (non représentée) peut en outre être fixée au sommet de l'ensemble mobile 11. Cette tige permet de détecter (en tournant) si des objets sont présents dans l'environnement proche du détecteur 1 (quelques dizaines de centimètres) pour vérifier si des distances de sécurité fixées par des normes sont respectées. Par exemple, une alarme est émise en cas de résistance à la rotation pour indiquer que le détecteur 1 est mal positionné ou que des objets ont été entreposés trop près de celui-ci.

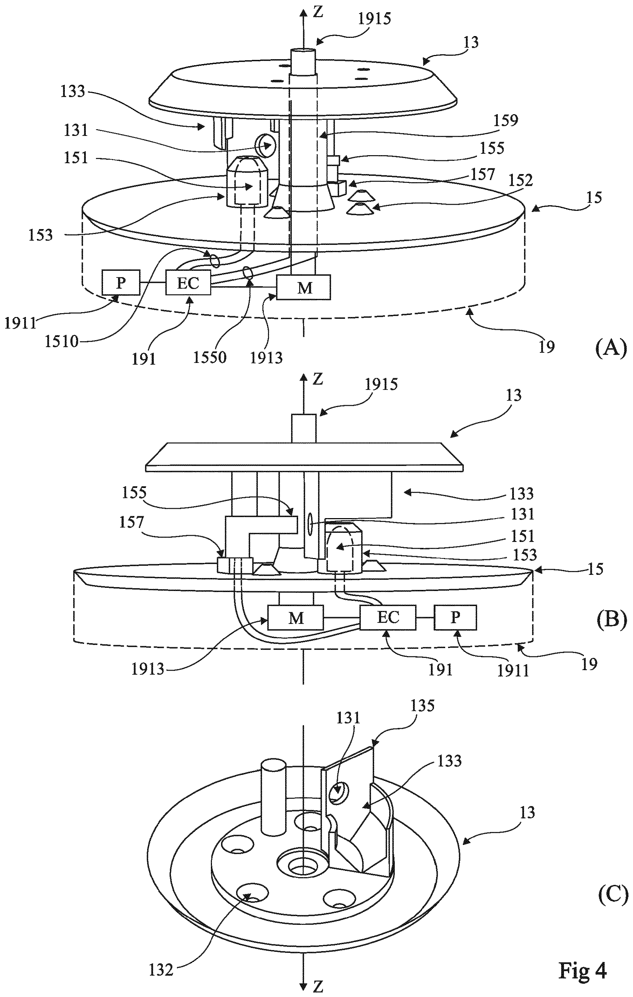

La figure 4 est une représentation en perspective et par des vues (A), (B) et (C), partielles et schématiques, d'un mode de réalisation de parties 13 et 15 du détecteur 1 de la figure 1.

Les vues (A) et (B) représentent le couvercle 13 et la face supérieure 15 du boitier 19. La vue (C) représente l'intérieur du couvercle 13.

La face supérieure 15 du boitier 19 comprend, entre autres, un cylindre creux 159 dans lequel passe un arbre moteur 1915. L'arbre moteur 1915 entraine par sa rotation la rotation de l'ensemble mobile 11 autour de l'axe Z. L'ensemble mobile 11 est fixé à l'arbre moteur 1915 en sortie du cylindre 159 (au-dessus du couvercle 13). L'arbre moteur 1915 est relié, dans le boitier 19, à un moteur 1913 (M). Le moteur est relié à un circuit électronique 191 (EC) de commande. Le circuit 191 et/ou le moteur sont alimentés par une source d'énergie 1911 (P). La source d'énergie 1911 est, par exemple, une pile ou une batterie.

La face supérieure 15 comprend, de plus, des embases coniques 152 (au nombre de quatre sur la figure 4). Les plots d'assemblage 172 des éléments 17 se superposent aux embases 152. Les embases 152 permettent ainsi de fixer les éléments 17 au boitier 19, par sa face supérieure 15. Le nombre d'embases 152 est égal au nombre de plots d'assemblage 172 présents sur chacun des éléments 17 du détecteur 1.

La face supérieure 15 comprend, en outre, un premier emplacement 153 pour recevoir la LED 151 et un deuxième emplacement 157 pour recevoir le photodétecteur 155.

Le premier emplacement 153 a la forme d'un cylindre creux dont l'extrémité est située dans la chambre tronconique. L'intérieur du cylindre est destiné à recevoir la LED 151 qui est engagée verticalement depuis l'intérieur du boitier 19.

Le deuxième emplacement 157 a la forme d'un plot en saillie de la face supérieure 15 et réceptionne le photodétecteur 155. Le photodétecteur 155 est positionné horizontalement (dans un plan orthogonal à l'axe Z).

La LED 151 et le photodétecteur 155 sont reliés électriquement (liaisons 1510 et 1550) au circuit électronique 191 de commande situé dans le boitier 19, et sont préférentiellement portés par une carte électronique portant le circuit 191.

Le couvercle 13 comprend, entre autres, des orifices 132 (au nombre de quatre sur la figure 4) qui se superposent aux plots d'assemblage 172. Les orifices 132 permettent ainsi de fixer (par exemple à l'aide de vis) le couvercle 13 aux éléments 17 et au boitier 19, par la face supérieure 15. Le nombre d'orifices 132 est égal au nombre d'embases 152, et ainsi au nombre de plots d'assemblage 172 présents sur chacun des éléments 17 du détecteur 1.

Le couvercle 13 comprend, de plus, une sous-chambre 133 optique. La sous-chambre 133 est, comme la chambre optique, noire et opaque. La sous-chambre 133 est isolée optiquement de la chambre par des écrans afin de réduire le risque de contamination lumineuse de la sous-chambre 133 par la lumière extérieure. L'un 135 des écrans de la sous-chambre 133 est vertical et comprend un orifice 131 placé devant le photodétecteur 155. L'orifice 131 est disposé de telle sorte que le photodétecteur observe, à travers l'orifice 131, la sous-chambre 133 au niveau du sommet de l'emplacement 153, donc de la LED 151.

Les embases 152 et les faces internes des orifices 132 sont de préférence coniques et adaptées aux extrémités respectives des plots 172 pour faciliter le montage et garantir l'alignement de l'empilement des anneaux 171. En outre, cela permet de fixer la position de la sous-chambre 133 par rapport à la LED 151.

Lorsque le détecteur 1 de fumées est en fonctionnement, la LED 151 émet un faisceau lumineux. Le faisceau lumineux est focalisé grâce à la forme conique du cylindre 153. En l'absence de fumées, le faisceau est absorbé par les écrans de la sous-chambre 133 noire et le photodétecteur 155 ne détecte pas de lumière. En présence de fumées, des particules sont en suspension dans l'air de la chambre et le faisceau émis par la LED 151 est diffusé par les particules de fumées. Le photodétecteur 155 détecte alors, à travers l'orifice 131, de la lumière (indirecte) diffusée. Le photodétecteur 155 transmet électriquement, au circuit électronique 191, une information représentative de l'intensité du signal lumineux reçu.

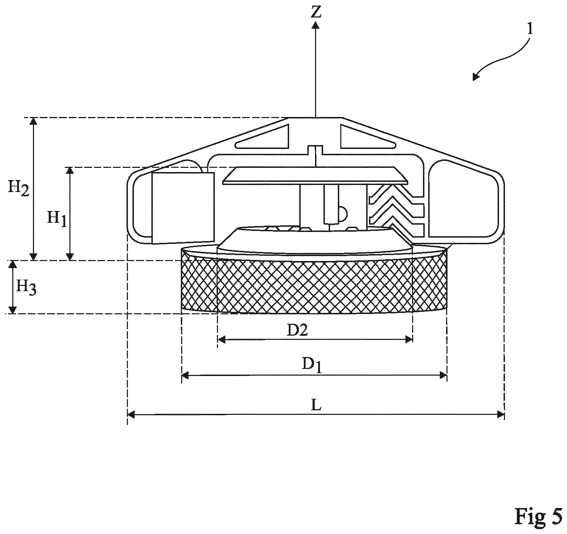

La figure 5 est une représentation latérale, partielle et schématique, d'un mode de réalisation du détecteur de la figure 1. Plus précisément cette figure 5 représente les parties 11, 13, 15, 17 du détecteur 1 de fumées de la figure 1.

Cette figure fait ressortir des dimensions respectives entre les différents éléments.

A titre d'exemple de réalisation, un détecteur 1 peut présenter les dimensions suivantes :
le diamètre D₁ du boitier 19 est compris entre 3 et 20 cm, de préférence entre 5 et 15 cm, le diamètre D₁ étant préférentiellement égal à environ 9 cm, par exemple égal à 9 cm ;
le diamètre externe D₂ de l'empilement d'éléments 17, ou diamètre externe des anneaux 171, est compris entre 3 et 20 cm, de préférence entre 5 et 15 cm, le diamètre D₂ étant préférentiellement égal à environ 7 cm, par exemple égal à 7 cm ;
la longueur L de l'ensemble mobile 11 est supérieure au diamètre D₂ - cette longueur L est comprise entre 3 et 30 cm, de préférence entre 5 et 15 cm, la longueur L étant préférentiellement égale à environ 13 cm, par exemple égale à 13 cm ;
la hauteur H₁ de l'empilement d'éléments 17 dépend du nombre d'anneaux 171 de l'empilement, de la hauteur d'un anneau 171 et de l'espacement entre deux anneaux 171 - cette hauteur H₁ est comprise entre 0,5 et 15 cm, de préférence entre 1 et 5 cm, la hauteur H₁ étant préférentiellement égale à environ 3 cm, par exemple égale à 3 cm ;
la hauteur H₂ du détecteur 1, hors boitier 19, est comprise entre 1 et 20 cm, de préférence entre 2 et 10 cm, la hauteur H₂ étant préférentiellement égale à environ 5 cm, par exemple égale à 5 cm ; et
la hauteur H₃ du boitier 19 est comprise entre 1 et 10 cm, de préférence entre 1 et 8 cm, la hauteur H₃ étant préférentiellement égale à environ 3 cm, par exemple égale à 3 cm.

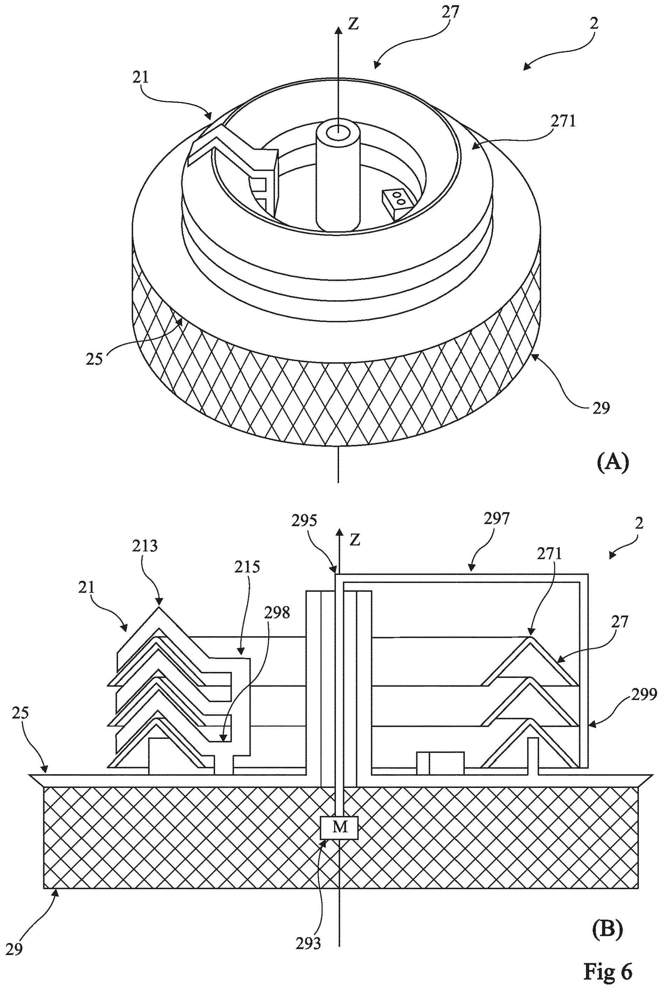

La figure 6 est une représentation, par des vues (A) et (B), partielles et schématiques, respectivement en perspective et en coupe d'un autre mode de réalisation d'un détecteur 2 de fumées.

Le détecteur 2 comprend entre autres un boitier 29, dont une face supérieure 25 porte un empilement d'éléments 27.

Le mode de réalisation représenté en figure 6 diffère du mode de réalisation décrit en relation avec la figure 1 par le fait que le nettoyage des chicanes est effectué par un ensemble 21 intérieur à la chambre. L'ensemble 21 est équipé d'un module de pattes 213 semblables aux pattes 113 de l'ensemble mobile 11 du détecteur 1 de la figure 1. Les pattes 213 sont fixées à la face supérieure 25 du boitier par une potence 215 reposant (pied 298) sur le boitier 29. Les pattes 213 de l'ensemble 21 évoluent dans les interstices formés entre des anneaux 271 des éléments 27. L'ensemble 21, dans le mode de réalisation de la figure 6, est fixe et l'empilement d'éléments 27 est mobile. L'empilement d'éléments 27 est, par exemple, fixé à une ou plusieurs structures 297.

Chaque structure 297 a, par exemple, une forme de "U" inversé. Le nombre de structures est choisi afin de laisser subsister le maximum possible de passages d'air tout en assurant la tenue mécanique des anneaux 271. Les structures sont reliées, par un arbre moteur 295, à un moteur 293 (placé dans le boitier 29). Le moteur 293 engendre la rotation de l'empilement 27, par l'arbre moteur 295 et la ou les structures 297.

Chaque structure 297 est fixée, par exemple, à l'ensemble des anneaux 271 de l'empilement, par des points d'attaches 299 situés à l'extérieur de la base des anneaux 271.

Dans ce mode de réalisation, les éléments 27 ne comprennent pas de plots d'assemblage. L'espacement entre les anneaux 271 est, par exemple, fixé par l'espacement entre les points d'attaches 299. L'espace entre les points d'attaches est par exemple compris entre 0,1 et 3 cm, de préférence entre 0,5 et 1,5 cm et est préférentiellement égal à environ 0,7 cm, par exemple égal à 0,7 cm.

On peut envisager, dans un autre mode de réalisation non représenté, imposer des distances différentes entre les anneaux 271. L'espacement entre les points d'attaches est alors variable.

En variante, les anneaux 271 sont fixés les uns aux autres par des plots (non représentés en figure 6) les reliant entre eux dans leur section.

A titre d'exemple, on peut fixer des brosses (non représentées en figure 6) aux extrémités extérieures des pattes 213 et fixer une grille anti-insectes et anti-poussière à l'empilement d'éléments 27. La rotation de la grille, entrainée par la rotation de l'empilement, engendre un frottement des brosses sur la grille et donc un nettoyage de celle-ci.

Tout ou partie des variantes au mode de réalisation de la figure 1 s'appliquent au mode de réalisation de la figure 6. En particulier, on peut envisager fixer à l'extrémité d'une patte 213 de l'ensemble 21, une ailette de ventilation similaire à l'ailette 111 du détecteur 1 représenté en figure 3.

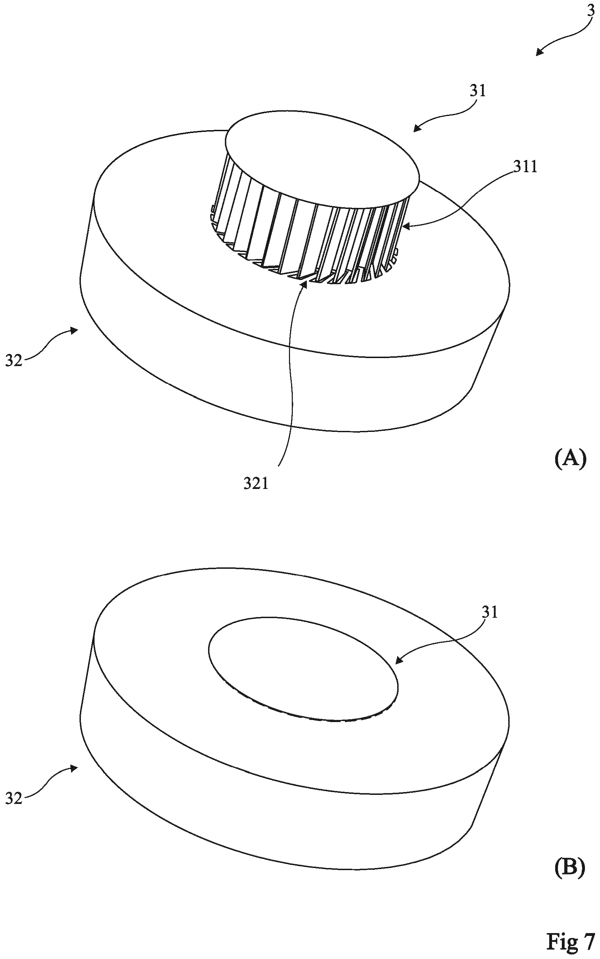

La figure 7 est une représentation, par des vues (A) et (B) en perspective, partielles et schématiques, d'un autre mode de réalisation d'un détecteur 3 de fumées, non couvert par l'invention.

Le détecteur 3 comprend entre autres un boitier composé d'une partie mobile 31 et d'une partie fixe 32.

La partie mobile 31 correspond à un cylindre, dont la face latérale comprend une succession de parois 311 anguleuses verticales définissant des passages indirects ou chicanes de l'extérieur à une chambre optique présente à l'intérieur dudit cylindre. L'ensemble de ces chicanes forme un système de chicanes.

La partie fixe 32 correspond à un autre cylindre. La partie fixe 32 forme un anneau de réception de la partie mobile 31. La surface latérale intérieure de la partie fixe 32 est dotée de parois 321 ayant sensiblement la même forme que les chicanes de sorte que la partie mobile 31 puisse coulisser verticalement dans la partie fixe 32.

Dans le mode de réalisation illustré en figure 7, le mouvement de glissement de la partie mobile dans la partie fixe permet de nettoyer les chicanes. Plus particulièrement, le glissement des parois 321 de la partie fixe 32 dans les chicanes de la partie mobile 31 permet de dégager les chicanes d'éventuelles obstructions.

Le nettoyage s'effectue par exemple par action manuelle sur la partie 31 de façon à l'enfoncer dans la partie 32, à l'encontre d'une force de rappel élastique provoquée par un ressort.

Un avantage des modes de réalisation et de mise en œuvre décrits est l'augmentation de la fiabilité du détecteur par la possibilité de tester intégralement son système de détection et son environnement.

Un autre avantage des modes de réalisation et de mise en œuvre décrits est l'aptitude du détecteur à s'autonettoyer.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en œuvre pratique des modes de réalisation et variantes décrits est à la portée de l'homme du métier à partir des indications fonctionnelles données ci-dessus.

## Revendications

1. Détecteur (1 ; 2) de fumées comprenant :
une chambre de détection ;
un système de chicanes entourant la chambre, permettant d'isoler la chambre de la lumière extérieure et le passage d'air de l'extérieur à l'intérieur de la chambre; et
un actionneur mécanique (113 ; 213 ; 321) capable de nettoyer, en cas d' obstacles à la circulation d'air, les chicanes,
le détecteur de fumées étant **caractérisé en ce que** les chicanes sont créées par un empilement successif d'éléments (17 ; 27) comportant chacun un anneau (171 ; 271).

2. Détecteur selon la revendication 1, comprenant un dispositif adapté à détecter une résistance à la rotation d'un moteur de l'actionneur et à émettre une alarme lorsque la force du moteur n'est pas suffisante pour nettoyer les chicanes.

3. Détecteur selon la revendication 1 ou 2, dans lequel la section transversale des anneaux (171 ; 271) a une forme générale en "U" ou en "V".

4. Détecteur selon l'une quelconque des revendications 1 à 3, comportant en outre :
un boitier (19 ; 29) recevant lesdits éléments (17 ; 27) ; et
un couvercle (13) fermant l'empilement à l'opposé du boitier (19 ; 29), de sorte à fermer la chambre.

5. Détecteur selon l'une quelconque des revendications 1 à 4, comprenant en outre un ensemble (11 ; 21) de pattes (113 ; 213) intercalées entre deux anneaux (171 ; 271) successifs, chaque patte (113 ; 213) ayant une forme générale correspondant à la forme générale de la section des anneaux (171 ; 271).

6. Détecteur selon les revendications 4 et 5, dans lequel l'ensemble (11 ; 21) est porté par le boitier (19 ; 29).

7. Détecteur selon la revendication 5 ou 6, dans lequel l'ensemble (11 ; 21) comprend une ou plusieurs ailettes (111) externes aux anneaux (171 ; 271).

8. Détecteur selon l'une quelconque des revendications 5 à 7, dans lequel l'ensemble (11) est en rotation autour de la direction axiale de l'empilement.

9. Détecteur selon la revendication 8, dans lequel l'ensemble (11) est entrainé par un moteur (1913).

10. Détecteur selon l'une quelconque des revendications 5 à 9, dans lequel l'ensemble (11) est externe à la chambre.

11. Détecteur selon l'une quelconque des revendications 5 à 7, dans lequel l'ensemble (21) est fixe.

12. Détecteur selon l'une quelconque des revendications 5 à 7 et 11, dans lequel les anneaux (271) sont mobiles et en rotation autour de la direction axiale de l'empilement.

13. Détecteur selon la revendication 12, dans lequel l'empilement est entrainé par un moteur (293).

14. Détecteur selon l'une quelconque des revendications 5 à 7 et 11 à 13, dans lequel l'ensemble (21) est interne à la chambre.

15. Détecteur selon l'une quelconque des revendications 5 à 14, dans lequel les pattes (113 ; 213) sont équipées de brosses et l'empilement est équipé d'une grille externe anti-insecte et anti-poussière, la grille étant nettoyée par les brosses lors de la rotation de l'empilement.

16. Détecteur selon l'une quelconque des revendication 1 à 15, comportant en outre un circuit électronique (191) de commande.

17. Détecteur selon l'une quelconque des revendications 1 à 16, comprenant, dans la chambre, une diode électroluminescente (151) et un photodétecteur (155).

## Patentansprüche

1. Ein Rauchdetektor (1; 2), der Folgendes aufweist:
eine Detektionskammer;
ein die Kammer umgebendes Ablenkblechsystem, das es ermöglicht, die Kammer von Außenlicht zu isolieren und Luft von außerhalb in das Innere der Kammer strömen zu lassen; und
einen mechanischen Aktor, der in der Lage ist, im Falle von Hindernissen zur Luftzirkulation die Ablenkbleche zu reinigen,
wobei der Rauchdetektor **dadurch gekennzeichnet ist, dass** die Ablenkbleche durch ein aufeinanderfolgendes Stapeln von Elementen (17; 27) gebildet werden, die jeweils einen Ring (171; 271) aufweisen.

2. Der Detektor nach Anspruch 1, der eine Vorrichtung aufweist, die so ausgelegt ist, dass sie einen Widerstand gegen die Drehung eines Motors des Aktors erfasst und einen Alarm auslöst, wenn die Kraft des Aktormotors nicht ausreicht, um die Ablenkbleche zu reinigen.

3. Der Detektor nach Anspruch 1 oder 2, wobei der Querschnitt der Ringe (171; 271) eine allgemeine "U"- oder "V"-Form aufweist.

4. Der Detektor nach einem der Ansprüche 1 bis 3, der ferner Folgendes aufweist:
Ein Gehäuse (19; 29), das die Elemente (17; 27) aufnimmt; und
eine Abdeckung (13), die den Stapel gegenüber dem Gehäuse (19; 29) verschließt, um die Kammer zu verschließen.

5. Der Detektor nach einem der Ansprüche 1 bis 4, der ferner eine Baugruppe (11; 21) von Laschen (113; 213) aufweist, die zwischen zwei aufeinanderfolgenden Ringen (171; 271) eingeschoben sind, wobei jede Lasche (113; 213) eine allgemeine Form aufweist, die der allgemeinen Form des Querschnitts der Ringe (171; 271) entspricht.

6. Der Detektor nach Anspruch 4 und 5, wobei die Baugruppe (11; 22) von dem Gehäuse (19; 29) getragen wird.

7. Der Detektor nach Anspruch 5 oder 6, wobei die Baugruppe (11; 21) eine oder mehrere Flügel (111) außerhalb der Ringe (171; 271) aufweist.

8. Der Detektor nach einem der Ansprüche 5 bis 7, wobei sich die Baugruppe (11) um die axiale Richtung des Stapels dreht.

9. Der Detektor nach Anspruch 8, wobei die Baugruppe (11) von einem Motor (1913) angetrieben wird.

10. Der Detektor nach einem der Ansprüche 5 bis 9, wobei die Baugruppe (11) außerhalb der Kammer liegt.

11. Der Detektor nach einem der Ansprüche 5 bis 7, wobei die Baugruppe (21) feststehend ist.

12. Der Detektor nach einem der Ansprüche 5 bis 7 und 11, wobei die Ringe (271) bewegbar sind und sich um die axiale Richtung des Stapels drehen.

13. Der Detektor nach Anspruch 12, wobei der Stapel von einem Motor (293) angetrieben wird.

14. Der Detektor nach einem der Ansprüche 5 bis 7 und 11 bis 13, wobei die Baugruppe (21) innerhalb der Kammer angeordnet ist.

15. Der Detektor nach einem der Ansprüche 5 bis 14, wobei die Laschen (113; 213) mit Bürsten ausgestattet sind und der Stapel mit einem äußeren Insekten- und Staubschutzgitter ausgestattet ist, wobei das Gitter während der Drehung des Stapels durch die Bürsten gereinigt wird.

16. Der Detektor nach einem der Ansprüche 1 bis 15, der ferner eine elektronische Steuerungsschaltung (191) aufweist.

17. Der Detektor nach einem der Ansprüche 1 bis 16, der in der Kammer eine lichtemittierende Diode (151) und einen Fotodetektor (155) aufweist.

## Claims

1. A smoke detector (1; 2) comprising:
a detection chamber;
a baffle system surrounding the chamber, enabling to isolate the chamber from outer light and enabling air to flow from the outside to the inside of the chamber; and
a mechanical actuator capable of cleaning, in case of obstacles to air circulation, the baffles,
the smoke detector being **characterized in that** baffles are created by a successive stacking of elements (17; 27), each comprising a ring (171; 271).

2. The detector according to claim 1, comprising a device adapted to detect resistance to the rotation of a motor of the actuator and emit an alarm when the force of the actuator motor is not sufficient to clean the baffles.

3. The detector according to claim 1 or 2, wherein the cross-section of the rings (171; 271) has a general "U" or "V" shape.

4. The detector according to any of claims 1 to 3, further comprising:
a housing (19; 29) receiving said elements (17; 27); and
a cover (13) closing the stack opposite to the package (19; 29), to close the chamber.

5. The detector according to any of claims 1 to 4, further comprising an assembly (11; 21) of tabs (113; 213) interposed between two successive rings (171; 271), each tab (113; 213) having a general shape corresponding to the general shape of the cross-section of the rings (171; 271).

6. The detector according to claims 4 and 5, wherein the assembly (11; 22) is supported by the housing (19; 29).

7. The detector according to claim 5 or 6, wherein the assembly (11; 21) comprises one or a plurality of blades (111) external to the rings (171; 271).

8. The detector according to any of claims 5 to 7, wherein the assembly (11) rotates around the axial direction of the stack.

9. The detector according to claim 8, wherein the assembly (11) is driven by a motor (1913).

10. The detector according to any of claims 5 to 9, wherein the assembly (11) is external to the chamber.

11. The detector according to any of claims 5 to 7, wherein the assembly (21) is fixed.

12. The detector according to any of claims 5 to 7 and 11, wherein the rings (271) are mobile and rotate around the axial direction of the stack.

13. The detector according to claim 12, wherein the stack is driven by a motor (293).

14. The detector according to any of claims 5 to 7 and 11 to 13, wherein the assembly (21) is internal to the chamber.

15. The detector according to any of claims 5 to 14, wherein the tabs (113; 213) are equipped with brushes and the stack is equipped with an external insect and dust grid, the grid being cleaned by the brushes during the rotation of the stack.

16. The detector according to any of claim 1 to 15, further comprising an electronic control circuit (191).

17. The detector according to any of claim 1 to 16, comprising, in the chamber, a light-emitting diode (151) and a photodetector (155).
